# EUROPEAN PATENT SPECIFICATION

(11) **EP 2 592 059 B1**
(45) Date of publication and mention of the grant of the patent: **23.09.2020**
(21) Application number: 13154358.9
(22) Date of filing: 21.11.2008
(51) Int. Cl.: C04B 35/195

(54) **Composition for applying to honeycomb bodies**
Mischung zum Auftragen auf Honeycomb Körpern
Composition à appliquer à l'objets honeycomb

(30) Priority: 30.11.2007 US 5065
(43) Date of publication of application: 15.05.2013
(62) Divisional of application: 08856992.6
(73) Proprietor: Corning Incorporated, Corning, NY 14831 (US)
(72) Inventor: Ellison, Adam J, Painted Post,, NY New York 14870 (US); Keegan, Kimberly M, Corning,, NY New York 14830 (US); Shustack, Paul J, Elmira,, NY New York 14905 (US); Tepesch, Patrick D, Corning,, NY New York 14830 (US)
(74) Representative: Elkington and Fife LLP

(56) References cited:
- US-A- 4 191 583
- US-A- 4 329 162
- US-A- 4 568 402
- US-A1- 2003 026 944
- US-A1- 2005 103 232
- US-B1- 6 368 992

## Description

### Field

The present invention relates to improved compositions for sealing selected channels of porous ceramic honeycombs to form porous ceramic wall-flow filters therefrom.

### Background

Ceramic wall flow filters are finding widening use for the removal of particulate pollutants from diesel or other combustion engine exhaust streams. A number of different approaches for manufacturing such filters from channeled honeycomb structures formed of porous ceramics are known. The most widespread approach is to position cured plugs of sealing material at the ends of alternate channels of such structures which can block direct fluid flow through the channels and force the fluid stream through the porous channel walls of the honeycombs before exiting the filter. The particulate filters used in diesel engine applications are typically formed from inorganic material systems, chosen to provide excellent thermal shock resistance, low engine back-pressure, and acceptable durability in use. The most common filter compositions are based on silicon carbide, aluminum titanate and cordierite. Filter geometries are designed to minimize engine back-pressure and maximize filtration surface area per unit volume. Illustrative of this approach is U.S. Patent No. 6,809,139, which describes the use of sealing materials comprising cordierite-forming (MgO-Al₂O₃-SiO₂) ceramic powder blends and thermosetting or thermoplastic binder systems to form such plugs.

U.S. Patent No. 4,191,583 discloses a range of compositions for a product having a manganese-containing cordierite crystal structure that allow for an impervious structure with high electrical resistivity and low thermal expansion.

Diesel particulate filters typically consist of a parallel array of channels with every other channel on each face sealed in a checkered pattern such that exhaust gases from the engine would have to pass through the walls of the channels in order to exit the filter. Filters of this configuration are typically formed by extruding a matrix that makes up the array of parallel channels and then sealing or "plugging" every other channel with a sealant in a secondary processing step. Summary

The present invention provides improved compositions for applying to honeycomb bodies. The compositions can be applied as plugging compositions for forming ceramic wall flow filters. Alternatively, the compositions of the present invention can be applied to at least a portion of a honeycomb body as an after applied artificial skin coating. Still further, the composition of the instant invention can also be utilized as segment cements for joining two or more honeycomb bodies together. According to embodiments of the invention, the compositions can be sintered and ceramed at temperatures less than 950°C and may form a highly crystalline, durable, relatively low thermal expansion ceramic material with a relatively high melting point.

The invention is defined in claims 1-7. Provided is a composition for applying to a honeycomb body, comprising an inorganic powder batch composition comprising a cordierite forming glass powder and a cordierite grog, wherein the cordierite forming glass powder comprises, on an oxide percent basis, of 49-55 % SiO₂, 13-19% MgO, 26-36% Al₂O₃ and a liquid vehicle, wherein the cordierite forming glass powder and the cordierite grog are present in the composition in a ratio grog : glass powder between 1:4 and 4:1 such that the composition can be sintered and ceramed at a temperature T < 950°C to provide a ceramed crystalline phase cordierite composition having a coefficient of thermal expansion (CTE) ≤ 25 x 10⁻⁷/°C at 1000°C.

### Brief Description of the Drawings

The accompanying drawings, which are incorporated in and constitute a part of this specification, illustrate certain embodiments of the instant invention and together with the description, serve to explain, without limitation, the principles of the invention.
FIG. 1 is an isometric view of porous honeycomb substrate according to embodiments of the invention.
FIG. 2a and FIG. 2b illustrate shrinkage dilatometry data for example compositions 13 through 17.
FIG. 3a and FIG. 3b illustrate a dL/dT versus temperature curve for the cordierite grog/glass mixtures of example compositions 13 through 17.
FIG. 4a and FIG. 4b illustrate shrinkage dilatometry data for an exemplary plugging composition comprising a cordierite grog/glass mixture wherein the ratio of grog to glass is 1:1.
FIG. 5a and FIG. 5b illustrate shrinkage dilatometry data for a first comparative plugging composition comprising cordierite grog in the absence of powdered glass.
FIG. 6a and FIG. 6b illustrate shrinkage dilatometry data for a second comparative plugging composition comprising a cordierite grog in the absence of powdered glass.

### Detailed Description

The present invention can be understood more readily by reference to the following detailed description, drawings, examples, and claims, and their previous and following description.

Disclosed are materials, compounds, compositions, and components that can be used for, can be used in conjunction with, can be used in preparation for, or are products of the disclosed method and compositions. These and other materials are disclosed herein, and it is understood that when combinations, subsets, interactions, groups, etc. of these materials are disclosed that while specific reference of each various individual and collective combinations and permutation of these compounds may not be explicitly disclosed, each is specifically contemplated and described herein. Thus, if a class of substituents A, B, and C are disclosed as well as a class of substituents D, E, and F and an example of a combination embodiment, A-D is disclosed, then each is individually and collectively contemplated. Thus, in this example, each of the combinations A-E, A-F, B-D, B-E, B-F, C-D, C-E, and C-F are specifically contemplated and should be considered skins or coatings. The compositions are generally comprised of an inorganic powder batch composition; an organic binder; and a liquid vehicle. In embodiments, the organic binder may be optional. The inorganic powder batch composition comprises a ceramic forming glass powder, the presence of which enables the plugging compositions to be sintered and ceramed at a temperature T less than 950°C.

The ceramic forming glass powder present in the inorganic powder batch composition is a cordierite ceramic forming glass powder, also referred to as cordierite glass. According to embodiments, the cordierite forming glass powder and may have from 50 to 53 weight percent SiO₂; from 13 to about 18.5 weight percent MgO; and from 28 to 35 weight percent Al₂O₃. According to other embodiments, it may be preferred for the cordierite glass powder to comprise, on a weight percent oxide basis, about 51% to about 54% SiO₂; about 13% to about 18% MgO; and about 28% to about 35% Al₂O₃. In addition to the cordierite components in the glass, it may be desirable to include other constituents to improve the manufacturing characteristics of the glass or to change its sintering behavior. Examples include but are not limited to Li, Na, K, oxides of Li, Na, K, Ca, Sr, La, Y and B. These oxides can be used to lower the devitrification temperature of the glass to ease manufacturing, to lower melting temperature, to change flow characteristics in the paste, and to adjust the degree of crystallinity of the final fired composition. These components may be preferably kept at a level of 0 to 5 weight percent and more preferably 0 to 2 weight percent.

The ceramic forming glass powder present in the inorganic powder batch composition can have any desired median particle size depending upon the desired properties of the resulting ceramed composition. However, according to some embodiments of the present invention, it is preferred for the ceramic forming glass powder to have a median particle size diameter dp₅₀ less than or equal to about 100 micrometers, 90 micrometers, 80 micrometers, 70 micrometers or 60 micrometers. In still other embodiments, it is preferred for the ceramic forming glass powder to have a median particle size diameter dp₅₀ less than or equal to about 50 micrometers, 40 micrometers, 30 micrometers, 20 micrometers or even 10 micrometers. In still further embodiments, it is preferred for the particle size diameter dp₅₀ of the ceramic forming glass powder to be in the range of from 8 to 12 micrometers, including particle size diameters of 9, 10, and 11 micrometers.

The cordierite grog can have any desired median particle size, again depending upon the desired properties of the resulting ceramed composition. However, according to some embodiments of the present invention, it is preferred for the ceramic grog powder to have a median particle size diameter dp₅₀ less than or equal to about 100 micrometers, 90 micrometers, 80 micrometers, 70 micrometers or 60 micrometers. In still other embodiments, it is preferred for the ceramic grog to have a median particle size diameter dp₅₀ less than or equal to about 50 micrometers, 40 micrometers, 30 micrometers, 20 micrometers or even 10 micrometers. In still further embodiments, it is preferred that the ceramic grog have a median particle size dp₅₀ in the range of from about 40 micrometers to about 50 micrometers, including exemplary particle size diameters of 41, 43, 45, 47 and 49 micrometers.

The presence of the cordierte grog is utilized to optimize one or more physical properties of the resulting ceramed composition. Further, the optimization can be achieved without significantly altering the coefficient of thermal expansion (CTE) of the resulting fired plug material. For example, increasing the relative amount of ceramic forming glass powder present in the composition will increase the amount of sintering that is required to fuse the ceramic forming glass particles together. In contrast, the ceramed grog particles will not sinter as they are already present in a ceramic form. Thus, by increasing the relative amount of ceramed grog present in the composition (i.e., a higher grog-to-glass weight ratio), the amount of sintering can be reduced. In turn, reducing the amount of sintering can yield less shrinkage during the firing process. However, the decreased shrinkage will also generally result in a corresponding decrease in the modulus of rupture strength of the resulting plug. Conversely, increasing the relative amount of ceramic forming glass (*i.e.,* a lower grog-to-glass ratio) will generally result in more sintering. In turn, the increased sintering can yield increased levels of shrinkage during the firing process, but with a higher resulting modulus of rupture strength (MOR).

Therefore, it can be seen that by modifying the relative amounts of ceramic forming glass powder and the cordierite grog, a predetermined balance of overall shrinkage and strength for the resulting sintered and ceramed composition can be obtained. To that end, it should be understood that when the cordierite grog powder is present in the inorganic powder batch compositions, embodiment, the weight ratio of cordierite grog to cordierite forming glass powder can be in the range of from 1:4 to 4:1, including exemplary weight ratios of 1:2.5; 1:2, 1:1.5, 1:1, 1.5:1, 2:1, and 2.5:1.

To prepare the compositions of the instant invention, the inorganic powder batch composition as described above may be mixed together with an organic binder and a liquid vehicle in order to provide a flowable paste-like consistency to the composition. If desired, one or more optional processing aids can also be added to the composition.

The preferred liquid vehicle for providing a flowable or paste-like consistency to the plugging composition is water, although other liquid vehicles can be used. To this end, the amount of the liquid vehicle component can vary in order to provide optimum handling properties and compatibility with the other components in the batch mixture. According to some embodiments, the liquid vehicle content is usually present as a super addition in an amount in the range of from 15% to 60% by weight of the inorganic powder batch composition and, more preferably, according to some embodiment can be in the range of from 20% to 50% by weight of the inorganic powder batch composition. However, it should also be understood that in another embodiment, it can be desirable to utilize as little liquid vehicle component as possible while still obtaining a paste like consistency capable of, for example, being forced into selected ends of a honeycomb substrate to form end plugs therein. Minimization of liquid components in the compositions can also lead to further reductions in the drying shrinkage of the compositions during the drying process.

The addition of the optional organic binder component can further contribute to the cohesion and plasticity of the composition prior to firing. This improved cohesion and plasticity can, for example, improve the ability to shape the composition. This can be advantageous when utilizing the composition to form skin coatings or when plugging selected ends of a honeycomb body. Exemplary organic binders include water soluble cellulose ether binders such as methylcellulose, hydroxypropyl methylcellulose, methylcellulose derivatives, and/or any combinations thereof. Particularly preferred examples include methylcellulose and hydroxypropyl methylcellulose. An exemplary commercially available methylcellulose binder is Methocel™ A4M available from the Dow Chemical Company of Midland Michigan, USA. Preferably, the organic binder can be present in the composition as a super addition in an amount in the range of from 0.1 weight percent to 5.0 weight percent of the inorganic powder batch composition and, more preferably, in an amount in the range of from 0.5 weight percent to 2.0 weight percent of the inorganic powder batch composition.

The compositions of the invention can optionally comprise at least one processing aid such as a plasticizer, lubricant, surfactant, sintering aid, rheology modifier, thixotropic agent, dispersing agents, or pore former. An exemplary plasticizer for use in preparing the plugging composition is glycerine. An exemplary lubricant can be a hydrocarbon oil or tall oil. Exemplary commercially available lubricant is Liga GS, available from Peter Greven Fett-Chemie and Durasyn® 162 hydrocarbon oil available from Innovene. A commercially available thixotropic agent is Benaqua 1000 available from Rheox, Inc. A pore former, may also be optionally used to optimize the porosity and median pore size of the resulting ceramed composition. Exemplary and non-limiting pore formers can include graphite, potato starch, polyethylene beads, and/or flour. Exemplary rheology modifiers can include organo-modified clays, gelling agents, thixotropes, and the like. A commercially available rheology modifier is Actigel™ 208, available from QCI Brittannic and Bentone® DE, available from Elementis. Exemplary dispersing agents that can be used include the NuoSperse® 2000 from Elementis and ZetaSperse® 1200, available from Air Products and Chemicals, Inc.

The addition of the optional sintering aid can enhance the strength of the ceramic plug structure after firing. Suitable sintering aids can generally include an oxide source of one or more metals such as strontium, barium, iron, magnesium, zinc, calcium, potassium, aluminum, lanthanum, yttrium, titanium, bismuth, or tungsten. In one embodiment, it is preferred that the sintering aid comprise one or more of B₂O₃, TiO₂, and K₂O. In another embodiment, it is preferred that the sintering aid comprise at least one rare earth metal. Still further, it should be understood that the sintering aid can be added to the composition in a powder or a liquid form.

Once formed, the compositions of the present invention can be fired under conditions effective to convert the batch composition into a primary crystalline phase ceramic composition. To that end, it has been discovered that the compositions described herein can be sintered and subsequently ceramed at firing temperatures T that are less than 950°C. Thus, effective firing conditions for sintering and ceraming the compositions can comprise firing the composition at a temperature T that is less than 950°C. For example, according to these embodiments, the plugging composition can be fired at a temperature in the range of from 800°C to 950°C, again including exemplary firing temperatures of 825°C, 850°C, 875°C, 900°C, 925°C.

If desired, the compositions can be dried prior to firing in order to substantially remove any liquid vehicle that may be present in the composition. As used herein, substantially all includes the removal of at least 95%, at least 98%, at least 99%, or even at least 99.9 % of the liquid vehicle present in the plugging composition prior to drying. Exemplary and non-limiting drying conditions suitable for removing the liquid vehicle include heating the end plugged honeycomb substrate at a temperature of at least 50°C, at least 60°C, at least 70°C, at least 80°C, at least 90°C, at least 100°C, at least 110°C, at least 120°C, at least 130°C, at least 140°C, or even at least 150°C for a period of time sufficient to at least substantially remove the liquid vehicle from the plugging composition. In one embodiment, the conditions effective to at least substantially remove the liquid vehicle comprise heating the plugging composition at a temperature in the range of from 60°C to 120°C. Further, the heating can be provided by any conventionally known method, including for example, hot air drying, or RF and/or microwave drying.

Compositions for applying to honeycomb bodies, such as plugging compositions, segment cements, and artificial skins or coatings, typically exhibit coefficients of thermal expansion (CTE) that are greater than that of the ceramic honeycomb substrate upon which they are applied. It is believed that this is due to the lack of orientation that exists in the applied compositions compared to the composition of the honeycomb structure. Accordingly, it is desirable to provide compositions that can be applied to honeycomb bodies and which minimize and mismatch between the coefficients of thermal expansion. In particular, the inventive compositions can be developed to be close to the composition of the underlying honeycomb substrate to which the composition is applied. However, because forming methods are different for substrate and the paste compositions, the properties or features are still often different, such as shrinkage behavior during firing and CTE after firing. As noted above, the shrinkage of the inventive compositions can be controlled by modifications to the relative weight ratio of ceramic grog to ceramic forming glass powder. In addition, after firing, the resulting sintered and ceramed compositions preferably exhibit a coefficient of thermal expansion at 1000°C (CTE) ≤ 25 x 10⁻⁷/°C. For example, according to some embodiments, the fired plugging compositions have a coefficient of thermal expansion (CTE) in the range of from 16 x 10⁻⁷/°C to 21 x 10⁻⁷/°C, including exemplary CTE values of 17 x 10⁻⁷/°C, 18 x 10⁻⁷/°C, 19 x 10⁻⁷/°C, and 20 x 10⁻⁷/°C.

As further summarized above, in another broad aspect of the invention, the compositions described herein can be applied to a honeycomb body as plugging compositions to provide end plugged porous ceramic wall flow filters. In particular, in some embodiments these plugging compositions are well suited for providing end plugged ceramic honeycomb wall-flow filters. For example, in one embodiment, an end plugged ceramic wall flow filter can be formed from a honeycomb substrate that defines a plurality of cell channels bounded by porous channel walls that extend longitudinally from an upstream inlet end to a downstream outlet end. A first portion of the plurality of cell channels can comprise an end plug, formed from a plugging composition as described herein, and sealed to the respective channel walls at the downstream outlet end to form inlet cell channels. A second portion of the plurality of cell channels can also comprise an end plug, formed from a plugging composition as described herein, and sealed to the respective channel walls at the upstream inlet end to form outlet cell channels.

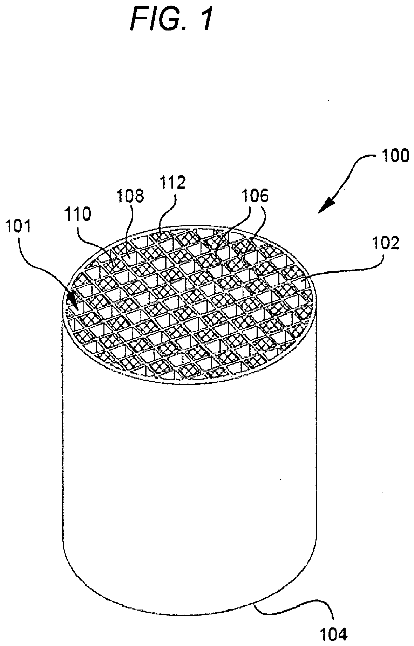

With reference to FIG. 1, an exemplary end plugged wall flow filter 100 is shown. As illustrated, the wall flow filter 100 preferably has an upstream inlet end 102 and a downstream outlet end 104, and a multiplicity of cells 108 (inlet), 110 (outlet) extending longitudinally from the inlet end to the outlet end. The multiplicity of cells is formed from intersecting porous cell walls 106. A first portion of the plurality of cell channels are plugged with end plugs 112 at the downstream outlet end (not shown) to form inlet cell channels and a second portion of the plurality of cell channels are plugged at the upstream inlet end with end plugs 112 to form outlet cell channels. The exemplified plugging configuration forms alternating inlet and outlet channels such that a fluid stream flowing into the reactor through the open cells at the inlet end 102, then through the porous cell walls 106, and out of the reactor through the open cells at the outlet end 104. The exemplified end plugged cell configuration can be referred to herein as a "wall flow" configuration since the flow paths resulting from alternate channel plugging direct a fluid stream being treated to flow through the porous ceramic cell walls prior to exiting the filter.

The honeycomb substrate can be formed from any conventional material suitable for forming a porous monolithic honeycomb body. For example, in one embodiment, the substrate can be formed from a plasticized ceramic forming composition. Exemplary ceramic forming compositions can include those conventionally known for forming cordierite, aluminum titanate, silica carbide, aluminum oxide, zirconium oxide, zirconia, magnesium, stabilized zirconia, zirconia stabilized alumina, yttrium stabilized zirconia, calcium stabilized zirconia, alumina, magnesium stabilized alumina, calcium stabilized alumina, titania, silica, magnesia, niobia, ceria, vanadia, nitride, carbide, or any combination thereof.

The honeycomb substrate can be formed according to any conventional process suitable for forming honeycomb monolith bodies. For example, in one embodiment a plasticized ceramic forming batch composition can be shaped into a green body by any known conventional ceramic forming process, such as, e.g., extrusion, injection molding, slip casting, centrifugal casting, pressure casting, dry pressing, and the like. Typically, a ceramic precursor batch composition comprises inorganic ceramic forming batch component(s) capable of forming, for example, one or more of the ceramic compositions set forth above, a liquid vehicle, a binder, and one or more optional processing aids including, for example, surfactants, sintering aids, plasticizers, lubricants, and/or a pore former. In an exemplary embodiment, extrusion can be done using a hydraulic ram extrusion press, or a two stage de-airing single auger extruder, or a twin screw mixer with a die assembly attached to the discharge end. In the latter, the proper screw elements are chosen according to material and other process conditions in order to build up sufficient pressure to force the batch material through the die. Once formed, the green body can be fired under conditions effective to convert the ceramic forming batch composition into a ceramic composition. Optimum firing conditions for firing the honeycomb green body will depend, at least in part, upon the particular ceramic forming batch composition used to form the honeycomb green body.

The formed monolithic honeycomb can have any desired cell density. In embodiments, the monolith 100 may have a cellular density from about 10 to 1000 cells/in² (1.6 to 155 cells/cm²). In additional embodiments, the monolith 100 may have a cellular density from about 70 cells/in² (10.9 cells/cm²) to about 400 cells/in² (62 cells/cm²). Still further, as described above, a portion of the cells 110 at the inlet end 102 are plugged with a paste having the same or similar composition to that of the body 101. The plugging is preferably performed only at the ends of the cells and form plugs 112 typically having a depth of about 5 to 20 mm, although this can vary. A portion of the cells on the outlet end 104 but not corresponding to those on the inlet end 102 may also be plugged in a similar pattern. Therefore, each cell is preferably plugged only at one end. The preferred arrangement is to therefore have every other cell on a given face plugged as in a checkered pattern as shown in FIG. 1. Further, the inlet and outlet channels can be any desired shape including but not limited to square, hexagonal, octagonal, rectangular, circular, oval, triangular, or combinations thereof. In the exemplified embodiment shown in FIG. 1, the cell channels are square shape.

The ceramic forming batch composition can be selected to as to yield a suitable ceramic honeycomb article which may cordierite, mullite, spinel, aluminum titanate, or a mixture thereof upon firing. For example, and without limitation, in one embodiment, the inorganic batch components can be selected to provide a cordierite composition consisting essentially of, as characterized in an oxide weight percent basis, from about 49 to about 53 oxide percent SiO₂, from about 33 to about 38 oxide percent Al₂O₃, and from about 12 to about 16 oxide percent MgO. To this end, an exemplary inorganic cordierite precursor powder batch composition preferably comprises about 33 to about 41 weight percent aluminum oxide source, about 46 to about 53 weight percent of a silica source, and about 11 to about 17 weight percent of a magnesium oxide source. Exemplary non-limiting inorganic batch component mixtures suitable for forming cordierite include those disclosed in U.S. Pat. Nos. 3,885,977; RE 38,888; 6,368,992; 6,319,870; 6,24,437; 6,210,626; 5,183,608; 5,258,150; 6,432,856; 6,773,657; 6,864,198; and U.S. Patent Application Publication Nos.: 2004/0029707; 2004/0261384.

Alternatively, in another embodiment, the inorganic batch components can be selected to provide, upon firing, a mullite composition consisting essentially of, as characterized in an oxide weight percent basis, from 27 to 30 percent by weight SiO₂, and from about 68 to 72 percent by weight Al₂O₃. An exemplary inorganic mullite precursor powder batch composition can comprise approximately 76% mullite refractory aggregate; approximately 9.0% fine clay; and approximately 15% alpha alumina. Additional exemplary non-limiting inorganic batch component mixtures suitable for forming mullite include those disclosed in U.S. Pat. Nos.: 6,254,822 and 6,238,618.

Still further, the inorganic batch components can be selected to provide, upon firing, an alumina titanate composition consisting essentially of, as characterized in an oxide weight percent basis, from about 8 to about 15 percent by weight SiO₂, from about 45 to about 53 percent by weight Al₂O₃, and from about 27 to about 33 percent by weight TiO₂. An exemplary inorganic aluminum titanate precursor powder batch composition can comprises approximately 10% quartz; approximately 47% alumina; approximately 30% titania; and approximately 13% additional inorganic additives. Additional exemplary non-limiting inorganic batch component mixtures suitable for forming aluminum titanate include those disclosed in U.S. Pat. Nos. 4,483,944; 4,855,265; 5,290,739; 6,620,751; 6,942,713; 6,849,181; U.S. Patent Application Publication Nos.:2004/0020846; 2004/0092381; and in PCT Application Publication Nos.: WO 2006/015240; WO 2005/046840; and WO 2004/011386.

When used as plugging compositions, the compositions of the present invention are well suited for use both as "single fire" and "second fire" plugging processes. In a "single fire" or "co-fire" process, the selectively end plugged honeycomb substrate is a formed green body or unfired honeycomb body comprised of a dried ceramic forming precursor composition as described above. The conditions effective to fire the plugging composition are also effective to convert the dried ceramic precursor composition of the green body into a sintered phase ceramic composition. Further according to this embodiment, the unfired honeycomb green body can be selectively plugged with a plugging composition having a composition that is substantially equivalent to the inorganic composition of the honeycomb green body. Thus, the plugging material can for example comprise either the same raw material sources or alternative raw material sources chosen to at least substantially match the drying and firing shrinkage of the green honeycomb.

Although the compositions of the present invention can be sintered and ceramed at firing temperatures less than 950°C, the conditions effective to single fire the plugging composition and the green body will depend upon the composition of the formed honeycomb green body and the firing conditions needed to convert the composition of the green honeycomb body to a ceramic composition. According to some embodiments, a single fire process will comprise firing the selectively plugged honeycomb green body at a maximum firing temperature in the range of from 1350°C to 1500°C, and more preferably at a maximum firing or soak temperature in the range of from 1375°C to 1430°C. The maximum firing or soak temperature can, for example, be held for a period of time in the range of from 5 to 30 hours, including exemplary time periods of 10, 15, 20, or even 25 hours. Still further, the entire firing cycle, including the initial ramp cycle up to the soak temperature, the duration of the maximum firing or soak temperature, and the cooling period can, for example, comprise a total duration in the range of from about 100 to 150 hours, including 105, 115, 125, 135, or even 145 hours. According to embodiments of the invention, after firing is complete, the finished plugs will exhibit similar thermal, chemical, and/or mechanical properties to that of the fired honeycomb body.

A second fire plugging process comprises plugging a honeycomb substrate that has already been fired to provide a ceramic honeycomb structure prior to selectively end plugging the honeycomb substrate with the plugging composition of the present invention. To that end, the plugging composition as described herein can then be forced into selected open cells of the honeycomb substrate in the desired plugging pattern and to the desired depth, by one of several conventionally known plugging process methods. For example, selected channels can be end plugged as shown in FIG. 1 to provide a "wall flow" configuration whereby the flow paths resulting from alternate channel plugging direct a fluid or gas stream entering the upstream inlet end of the exemplified honeycomb substrate, through the porous ceramic cell walls prior to exiting the filter at the downstream outlet end.

The plugged honeycomb structure can then be fired under conditions effective to convert the plugging composition into a ceramic composition. As noted above, the compositions of the present invention can be sintered and ceramed at temperatures T that are less than 950°C. Thus, effective firing conditions comprise firing the plugging composition at a maximum firing temperature T that is less than 950°C. For example, according to these embodiments, the plugging composition can be fired at a temperature in the range of from 800°C to 950°C, again including exemplary firing temperatures of 825°C, 850°C, 875°C, 900°C, 925°C.

In still another embodiment, the compositions of the present invention are also suitable for use in applying an "after applied" or non co-extruded artificial skin or surface coating to an extruded honeycomb body. As one of ordinary skill in the art will appreciate, when honeycomb substrates are formed and dried, the resulting body may need to be resized or shaped in order to comply with desired size and shape tolerances for a given end use application. Accordingly, portions of the outer surface of a formed honeycomb body can optionally be removed by known methods such as sanding, grinding, and the like, in order to obtain a resulting body having a desired shape. After the removal of material from the surface of the body, the compositions of the present invention can be applied to the out surface in order to form an after applied skin to honeycomb body and to re-seal and honeycomb substrate channels that may have been exposed or breached due to the removal of material. Once the skin coating has been applied, the compositions can again be dried and fired as described herein.

In still another embodiment, the disclosed compositions can be applied as a segment cement in order to join two or more cellular honeycomb bodies. For example, the cements can be used to join two or more honeycomb bodies lengthwise or in an end to end relationship. Alternatively, the cements can be used to laterally join two or more cellular segments. For example, in some embodiments, it may be desirable to join two or more cellular honeycomb segments together laterally or in a side to side arrangement in order to form a larger cellular or honeycomb structure that may be too large for extrusion forming techniques described above. Once the segment cement has been applied to a honeycomb and the desired number of cellular segments has been joined, the segment composition can again be dried and fired as described herein.

### Examples

To further illustrate the principles of the present invention, the following examples are put forth so as to provide those of ordinary skill in the art with a disclosure and description of how the plugging compositions and methods claimed herein can be made and evaluated. They are intended to be purely exemplary of the invention and are not intended to limit the scope of what the inventors regard as their invention. Efforts have been made to ensure accuracy with respect to numbers (e.g., amounts, temperatures, etc.); however, some errors and deviations may have occurred. Unless indicated otherwise, parts are parts by weight, temperature is °C or is at ambient temperature, and pressure is at or near atmospheric.

### Examples 1-12 are not according to the invention

In the following example, 12 exemplary plugging compositions (1 through 12) according to the present invention were prepared comprising varying amounts of cordierite forming glass powder and, in some examples, the cordierite forming glass powder was combined with cordierite grog. Five different cordierite forming glass compositions were used in the examples, each having various stoichiometric percentages of the oxide components present in the glass composition. The powdered glass compositions had median particle size diameters of about 10 micrometers. The five glass compositions used are set forth in Table 1 below.

**TABLE 1**

| **Glass** | **A** | **B** | **C** | **D** | **E** |
|---|---|---|---|---|---|
| SiO₂ | 51.3% | 51.3% | 52.65% | 54% | 54.75% |
| MgO | 13.8% | 13.8% | 15.9% | 18% | 15.2% |
| Al₂O₃ | 34.9% | 34.9% | 31.45% | 28% | 30.05% |

Using these cordierite glass compositions, the specific formulations for the 12 inventive plugging compositions are set forth in Table 2 below. Compositions 1-12 were used to form 5/16" rods that could be evaluated for shrinkage, coefficient of thermal expansion, modulus of rupture strength, and elastic modulus (young's modulus). The rods formed from compositions 1, 4, 5 and 9 were fired at 1000°C under conditions where the ramp rate from 20°C to 1000°C was at 100°C / hour, followed by a hold at 1000°C for three hours, followed by cool down from 1000°C to 20°C at a rate of 100°C per hour. Compositions 2-3, 6-8, and 10-12 were fired according to a schedule comprising an initial ramp from 20°C to 900°C at 100°C per hour, followed by a hold at 900°C for about 4.4 hours, followed by another ramp from 900°C to 1000°C at a 100°C per hour, followed by a cool down from 1000°C to 20°C at 100°C hour.

The shrinkage, coefficient of thermal expansion, modulus of rupture strength, and elastic modulus (young's modulus) data are reported in Table 3.

**TABLE 2**

| | **Batch Composition** | | | | | | | | | | | |
|---|---|---|---|---|---|---|---|---|---|---|---|---|
| | **1** | **2** | **3** | **4** | **5** | **6** | **7** | **8** | **9** | **10** | **11** | **12** |
| **Ingredient** | | | | | | | | | | | | |
| Cordierite Grog (45µm) | 700.0g | 600.0g | 500.0g | 700.0g | 700.0g | 600.0g | 500.0g | 400.0g | 700.0g | 600.0g | 500.0g | 600.0g |
| Cordierite Glass A | 300.0g | 400.0g | 500.0g | | | | | | | | | |
| Cordierite Glass B | | | | 300.0g | | | | | | | | |
| Cordierite Glass C | | | | | 300.0g | 400.0g | 500.0g | 600.0g | | | | |
| Cordierite Glass D | | | | | | | | | 300.0g | 400.0g | 500.0g | |
| Cordierite Glass E | | | | | | | | | | | | 400.0g |
| Methocel A4M Binder | 23.4g | 46.8g | 46.8g | 23.4g | 23.4g | 46.8g | 46.8g | 46.8g | 23.4g | 46.8g | 46.8g | 46.8g |
| Liga GS Lubricant | 3.0g | 3.0g | 3.0g | 3.0g | 3.0g | 3.0g | 3.0g | 3.0g | 3.0g | 3.0g | 3.0g | 3.0g |
| Deionized Water | 380.0g | 361.0g | 329.4g | 380.0g | 380.0g | 343.0g | 329.4g | 315.8g | 380.0g | 343.0g | 329.4g | 343.0g |

**TABLE 3**

| **Composition** | **Grog/Glass** | **Glass** | **Shrinkage (%)** | **CTE @ 1000°C** | **MOR (psi)** | **MOR Std. Dev.** | **E Mod (psi)** |
|---|---|---|---|---|---|---|---|
| 1 | 70 / 30 | A | -0.5 | 17.5 x 10⁻⁷/°C | 63.3 | 5.3 | |
| 2 | 60 / 40 | A | -0.15 | 16.4 x 10⁻⁷/°C | 94.5 | 9.5 | |
| 3 | 50 / 50 | A | 0.1 | 17.0 x 10⁻⁷/°C | 168.0 | 13.7 | |
| 4 | 70 / 30 | B | -0.6 | 18.3 x 10⁻⁷/°C | 54.8 | 7.0 | |
| 5 | 70 / 30 | C | -0.55 | 17.8 x 10⁻⁷/°C | 123.2 | 15.8 | |
| 6 | 60 / 40 | C | 0.1 | 16.5 x 10⁻⁷/°C | 205.7 | 11.3 | |
| 7 | 50 / 50 | C | 1.25 | 18.4 x 10⁻⁷/°C | 512.7 | 72.1 | 6.11 x 10⁵ |
| 8 | 40 / 60 | C | 2.2 | 18.2 x 10⁻⁷/°C | 1097.1 | 148.0 | 1.17 x 10⁶ |
| 9 | 70 / 30 | D | -0.3 | 20.8 x 10⁻⁷/°C | 164.9 | 10.0 | |
| 10 | 60 / 40 | D | 0.6 | 18.2 x 10⁻⁷/°C | 324.3 | 24.2 | |
| 11 | 50 / 50 | D | 1.2 | 20.8 x 10⁻⁷/°C | 599.0 | 59.0 | |
| 12 | 60 / 40 | E | 0.0 | 17.5 x 10⁻⁷/°C | 268.9 | 17.6 | 3.06 x 10⁵ |

The data in Table 3 indicates that by decreasing the grog-to-glass ratio in the inventive plugging compositions increases both the percentage of shrinkage and the modulus of rupture strength upon firing. Conversely, increasing the grog-to-glass ratio in the inventive plugging compositions decreases both the percentage of shrinkage and the modulus of rupture strength upon firing. Further, it can also be seen that under both circumstances, the CTE of the fired rods remained in a relatively narrow and acceptable range of between 16x10⁻⁷/°C to 21x10⁻⁷/°C.

### Examples 13-17

In the following example, 5 additional exemplary plugging compositions (14 through 17) according to the present invention and an example composition not according to the present invention (Example 13) were prepared comprising varying amounts of stoichiometric cordierite forming glass powder and cordierite grog. The specific formulations for compositions 13-18 are set forth in Table 4 below.

**TABLE 4**

| | **Batch Composition** | | | | |
|---|---|---|---|---|---|
| **Ingredient** | **13** | **14** | **15** | **16** | **17** |
| Cordierite Grog (325mesh) | 0.00g | 20.00g | 40.00g | 60.00g | 80.00g |
| Cordierite Glass (10µm median) | 100.00g | 80.00g | 60.00g | 40.00g | 20.00g |
| Methocel A4M | 1.17g | 1.17g | 1.17g | 1.17g | 1.17g |
| Liga GS | 0.30g | 0.30g | 0.30g | 0.30g | 0.30g |
| DI Water | 35.00g | 35.00g | 35.00g | 35.00g | 35.00g |

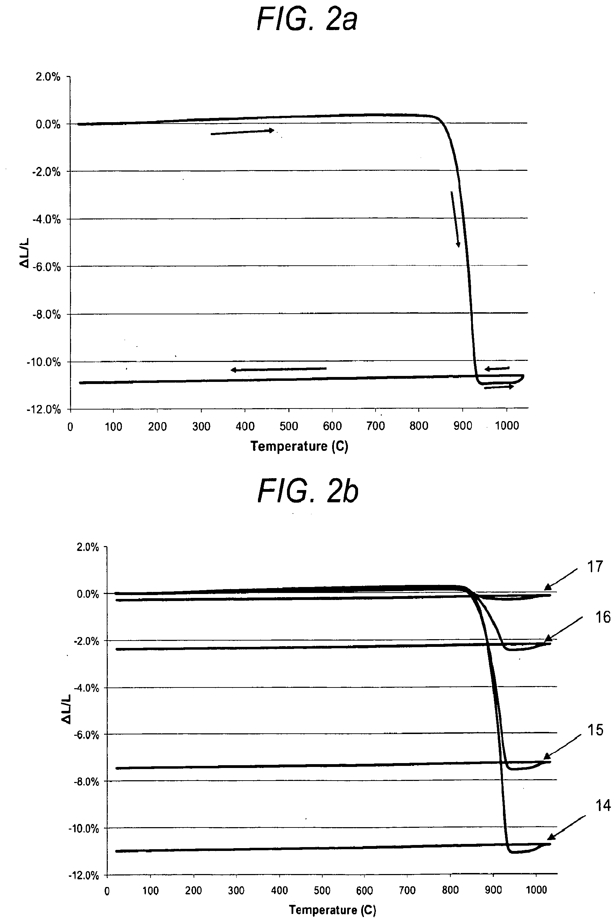

Shrinkage dilatometry experiments were conducted on compositions 13 through 17. FIG. 2a shows the shrinkage dilatometry data for composition 13, comprising the cordierite glass in the absence of any cordierite grog. In particular, the dilatometry data reflects the change in length upon heating relative to the initial length of a sample of a cordierite glass powder compact. Between approximately 800 and 950°C, the glass particles may soften resulting in shrinkage of the compact and formation of strong bonds between the particles. Between approximately 900 and 1000°C, the glass crystallizes, shrinkage stops, and the resulting crystallized composition has relatively low thermal expansion coefficient. The arrows indicate the progression of time in the experiment. FIG. 2b similarly shows the shrinkage dilatometry data for compositions 14 through 17 comprising pre-reacted cordierite powder (cordierite grog) in combination with varying amounts of cordierite forming glass powder (20 weight %, 40 weight %, 60 weight %, and 80 weight %). The data indicates that as more of the glass powder is replaced with cordierite powder, the overall shrinkage of the samples decreases, while the thermal expansion coefficient at the end of the heat-treatment remains relatively low. To that end, less shrinkage may be desired to reduce differential shrinkage of the applied compositions and the composition of the underlying honeycomb body.

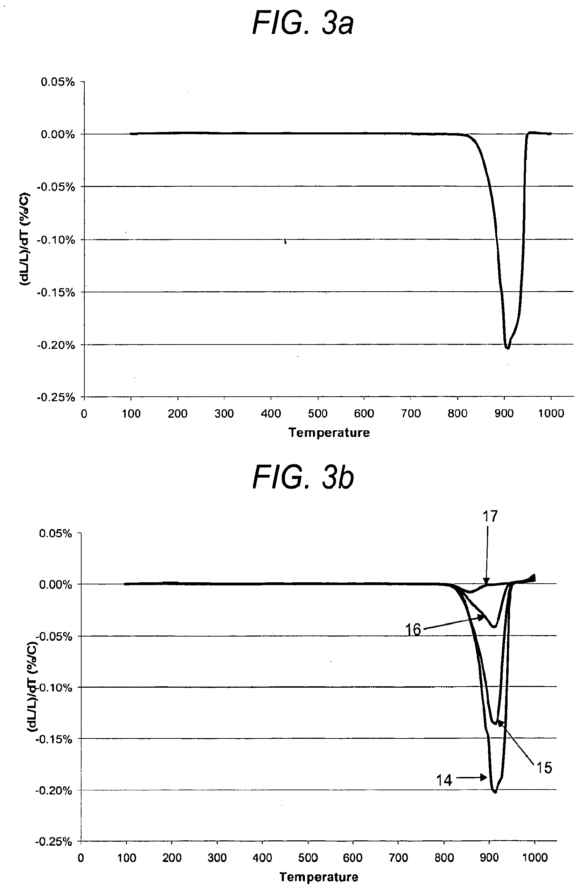

Still further, FIG. 3a is a derivative of FIG. 2a and provides the dL/dT versus temperature curve for the cordierite glass of composition 13. In particular, the data of FIG. 3a highlights the approximate temperature range in which the sintering due to the softening of the glass powder begins and ends, which in this example was in the range of about 850°C to 950°C. Similarly, FIG. 3b is a derivative of FIG. 2b and provides the dL/dT versus temperature curves for the example compositions 14 though 17. In particular, the data of FIG. 3b indicates that irrespective of the varying weight ratios of glass to grog present in compositions 14 through 17, the sintering temperature remained substantially unchanged. However, as the cordierite grog-to-glass ratio increase, the dL/dT during the sintering of the composition (between 800°C and 1000°C) decreased.

### Examples 18-21

Four additional inventive plugging compositions (18-21) of the present invention were prepared and evaluated for their ability to plug honeycomb bodies to form wall flow filters. The specific batch compositions of the four plugging compositions are set forth in Table 5 below.

**TABLE 5**

| | **Batch Compositions** | | | |
|---|---|---|---|---|
| **Ingredient** | **18** | **19** | **20** | **21** |
| Cordierite Grog (325 mesh) | 50.00g | 50.00g | 50.00g | 50.00g |
| Cordierite Glass (10µm) | 50.00g | 50.00g | 50.00g | 50.00g |
| Binder (Methocel A4M) | 0.45g | 0.585g | 0.585g | 1.20g |
| Thixotrope (Benaqua 1000) | 0.15g | | | |
| Rheology Modifier (Actigel 208) | | 1.00g | | 0.30g |
| Rheology Modifier (Bentone DE) | | | 0.15g | 0.30g |
| Dispersant (Nuosperse 2000) | 5.00g | 5.00g | 5.00g | |
| Dispersant (Zetasperse 1200) | | | | 7.00g |
| DI Water | 38.30g | 36.00g | 38.30g | 37.00g |

Each of compositions 18, 19, 20, and 21 were used to plug already-fired aluminum titanate honeycomb monoliths. The plug paste materials were forced into the parts through a mask using a press. The plugged parts were then dried overnight at 60°C then fired to 1000°C Theresulting parts had no visible cracks. Similarly, composition 20 was also used to plug a green cordierite honeycomb body. The plugged part was then dried and fired to a maximum soak temperature of 1410°C and that temperature was held for approximately 24 hours. The resulting fired part also had no visible cracks.

### Example 22

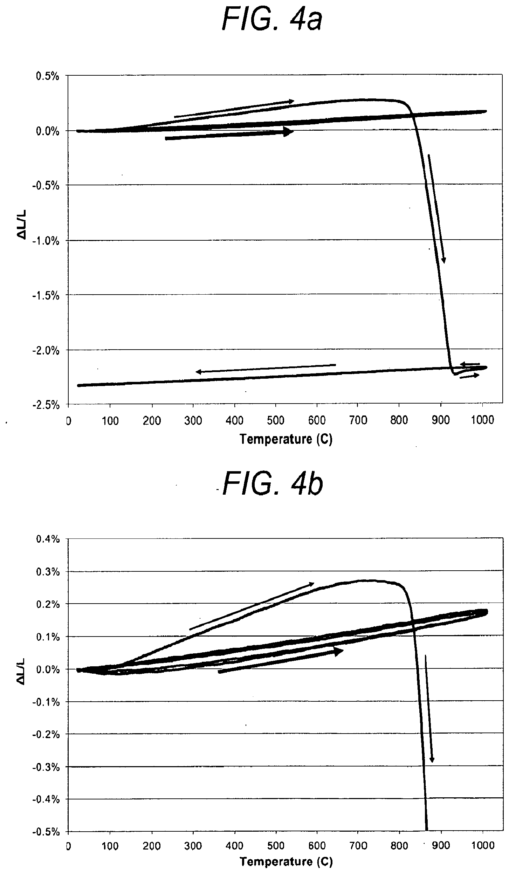

In this example, shrinkage dilatometry was evaluated for an exemplary plugging composition comprising a refractory cordierite powder (grog) and cordierite forming glass mixture wherein the ratio of cordierite grog to cordierite forming glass was 1:1. The composition was repetitively heated from room temperature to 1000°C four separate times. The data from the evaluation is set forth in FIG. 4a and FIG. 4b. FIG. 4a shows the length change upon heating relative to the initial length of the sample on the first run (represented by the relatively thin arrows) and 3 subsequent heating cycles (represented by the bold arrow). On the first run the glass softened and sintered, bonding the particles together, followed by crystallization and then cooling. On the subsequent heating cycles, the final structure was very stable resulting in no further length changes other than thermal expansion. FIG. 4b further represents the data from FIG. 4a after having been zoomed on the y-axis to show the stability of the material during the subsequent heating cycles.

### Comparative Examples 1 and 2

In this example, shrinkage dilatometry was evaluated for two comparative plugging compositions comprising cordierite grog without the presence of the cordierite forming glass powder. The specific comparative plugging compositions are set forth in Tables 6 and 7 below.

**TABLE 6**

| **Comparative 1** | **Oxide Wt %** | **Grams** | **Weight %** |
|---|---|---|---|
| Coarse Cordierite Grog | 50 | 500 | 39.68 |
| Fine Cordierite Grog | 30 | 300 | 23.81 |
| Pyrex Powder | 20 | 200 | 15.87 |
| Colloidal Silica | 25 | 250 | 19.84 |
| Organic Binder | 1 | 10 | 0.79 |
| DI Water | 24 | 240 | |

**TABLE 7**

| **Comparative 2** | **Oxide Wt %** | **Grams** | **Weight %** |
|---|---|---|---|
| Coarse Cordierite Grog | 30.00 | 300.00 | 22.56 |
| Fine Cordierite Grog | 50.00 | 500.00 | 37.59 |
| Pyrex powder | 20.00 | 200.00 | 15.04 |
| Colloidal Silica | 25.00 | 250.00 | 18.80 |
| Organic Binder | 2.00 | 20.00 | 1.50 |
| Hydrocarbon Oil | 6.00 | 60.00 | 4.51 |

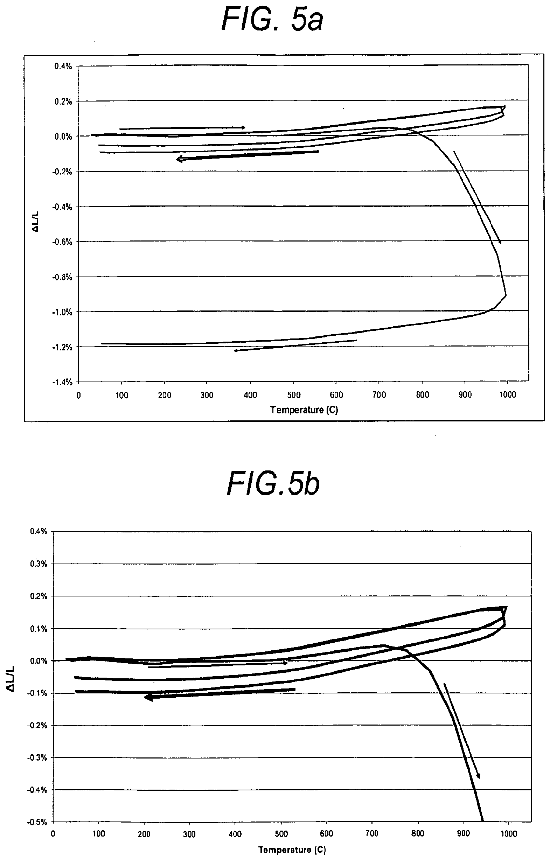

The shrinkage dilatometry data from the evaluation of the comparative example 1 is set forth in FIG. 5a and FIG. 5b. In particular, FIG. 5a shows the length change of comparative example 1 on the initial heating (represented by thin arrows) and compared to two subsequent heat treatments (represented by the thick arrow). It can be seen that the pyrex glass present in the composition may continue to soften on subsequent cycles leading to ongoing permanent changes in the dimensions, in addition to thermal expansion. FIG. 5b is the same plot as FIG. 5a but after being zoomed on the y-axis to the same scale as FIG. 4b discussed above. To that end, FIG. 5b further illustrates the continued dimensional changes of the pyrex-containing mixture on repeated heat-treatments.

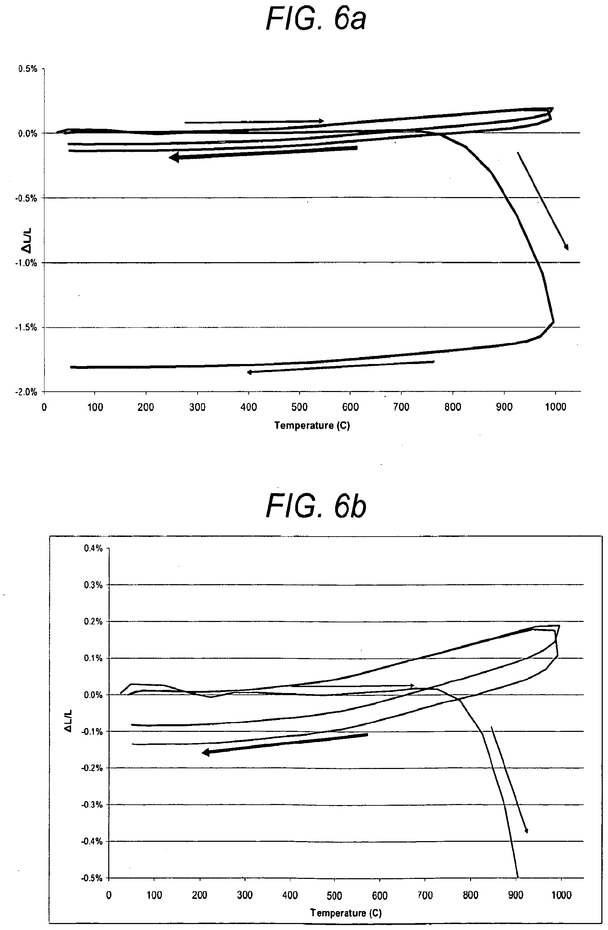

Similarly, the shrinkage dilatometry data from the evaluation of the comparative example 2 is set forth in FIG. 6a and FIG. 6b. In particular, FIG. 6a shows the length change of comparative example 2 on the initial heating (represented by thin arrows) and compared to two subsequent heat treatments (represented by the thick arrow). It can be seen that the pyrex glass present in the composition may continue to soften on subsequent cycles leading to ongoing permanent changes in the dimensions, in addition to thermal expansion. FIG. 6b is the same plot as FIG. 6a but after being zoomed on the y-axis to the same scale as FIG. 5b discussed above. To that end, FIG. 6b further illustrates the continued dimensional changes of the pyrex-containing mixture on repeated heat-treatments.

## Claims

1. A composition for applying to a honeycomb body, comprising:
an inorganic powder batch composition comprising a cordierite forming glass powder and a cordierite grog,
wherein the cordierite forming glass powder comprises, on an oxide percent basis, of:
49% to 55% SiO₂;
13% to 19% MgO;
26% to 36% Al₂O₃; and
a liquid vehicle;
wherein the cordierite forming glass powder and the cordierite grog are present in the composition in a ratio grog : glass powder between 1:4 and 4:1 such that the composition can be sintered and ceramed at a temperature T < 950°C to provide a ceramed crystalline phase cordierite composition having a coefficient of thermal expansion (CTE) ≤ 25 x 10⁻⁷/°C at 1000°C.

2. The composition of Claim 1, wherein the inorganic powder batch composition further comprises powdered cordierite.

3. The composition of Claim 1, wherein the composition can be sintered and ceramed at a temperature T < 950°C to provide a ceramed crystalline phase ceramic composition having a coefficient of thermal expansion (CTE) in the range of from 16 x 10⁻⁷/°C to 21 x 10⁻⁷/°C at 1000°C.

4. The composition of Claim 1, wherein the composition further comprises at least one processing aid selected from a plasticizer, lubricant, surfactant, sintering aid, rheology modifier, and pore former.

5. The composition of Claim 1, wherein the liquid vehicle comprises water.

6. The composition of Claim 1, further comprising an organic binder.

7. The composition of Claim 6, wherein the organic binder comprises a cellulose ether.

## Patentansprüche

1. Zusammensetzung zum Auftragen auf einen Wabenkörper, umfassend:
Chargenzusammensetzung aus anorganischem Pulver, umfassend ein Cordierit ausbildendes Glaspulver und eine Cordierit-Schamotte, wobei das Cordierit ausbildende Glaspulver auf einer Oxidprozentbasis umfasst:
49 % bis 55 % SiO₂;
13 % bis 19 % MgO;
26 % bis 36 % Al₂O₃, und ein flüssiges Vehikel;
wobei das Cordierit ausbildende Glaspulver und die Cordierit-Schamotte in der Zusammensetzung in einem Verhältnis Schamotte : Glaspulver zwischen 1:4 und 4:1 vorliegen, sodass die Zusammensetzung bei einer Temperatur T < 950 °C gesintert und keramiert werden kann, um eine keramierte Cordieritzusammensetzung mit kristalliner Phase mit einem Wärmeausdehnungskoeffizienten (CTE) ≤ 25 x 10⁻⁷/°C bei 1000 °C.

2. Zusammensetzung nach Anspruch 1, wobei die Chargenzusammensetzung aus anorganischem Pulver ferner pulverförmiges Cordierit umfasst.

3. Zusammensetzung nach Anspruch 1, wobei die Zusammensetzung bei einer Temperatur T < 950 °C gesintert und keramiert werden kann, um eine keramierte Keramikzusammensetzung mit kristalliner Phase mit einem Wärmeausdehnungskoeffizienten (CTE) in dem Bereich von 16 × 10⁻⁷/°C bis 21 × 10⁻⁷/°C bei 1000 °C bereitzustellen.

4. Zusammensetzung nach Anspruch 1, wobei die Zusammensetzung ferner wenigstens ein Verarbeitungshilfsmittel umfasst, ausgewählt aus einem Weichmacher, Schmiermittel, Tensid, Sinterhilfsmittel, Rheologiemodifikator und Porenbildner.

5. Zusammensetzung nach Anspruch 1, wobei das flüssige Vehikel Wasser umfasst.

6. Zusammensetzung nach Anspruch 1, ferner umfassend ein organisches Bindemittel.

7. Zusammensetzung nach Anspruch 6, wobei das organische Bindemittel einen Celluloseether umfasst.

## Revendications

1. Composition destinée à une application sur un corps en nid abeille, comprenant :
une composition de lot de poudre inorganique comprenant une poudre de verre formant la cordiérite et un débris de cordiérite, dans laquelle la poudre de verre formant la cordiérite comprend, sur une base de pourcentage d'oxyde, de :
49 % à 55 % de SiO₂ ;
13 % à 19 % de MgO ;
26 % à 36 % de Al₂O₃ ; et
un véhicule le liquide ;
dans laquelle la poudre de verre formant la cordiérite et le débris de cordiérite sont présents dans la composition dans une proportion débris : poudre de verre comprise entre 1:4 et 4:1 de telle sorte que la composition peut être frittée et céramée à une température T < 950°C afin de fournir une composition de cordiérite en phase cristalline céramée ayant un coefficient de dilatation thermique (CTE) ≤ 25 x 10⁻⁷/°C à 1000°C.

2. Composition selon la revendication 1, dans laquelle la composition de lot de poudre inorganique comprend en outre de la cordiérite en poudre.

3. Composition selon la revendication 1, dans laquelle la composition peut être frittée et céramée à une température T < 950°C afin de fournir une composition de céramique en phase cristalline céramée ayant un coefficient de dilatation thermique (CTE) dans la plage allant de 16 x 10⁻⁷/°C à 21 x 10⁻⁷/°C à 1000 °C.

4. Composition selon la revendication 1, dans laquelle la composition comprend en outre au moins un adjuvant de fabrication choisi parmi un plastifiant, un lubrifiant, un tensioactif, un auxiliaire de frittage, un modificateur de la rhéologie, et un agent de formation de pores.

5. Composition selon la revendication 1, dans laquelle le véhicule liquide comprend de l'eau.

6. Composition selon la revendication 1, comprenant en outre un liant organique.

7. Composition selon la revendication 6, dans laquelle le liant organique comprend un éther de cellulose.
